# EUROPÄISCHE PATENTANMELDUNG

(11) **EP 1 052 046 A2**
(43) Veröffentlichungstag der Anmeldung: **15.11.2000**
(21) Anmeldenummer: 00106774.3
(22) Anmeldetag: 30.03.2000
(51) Int. Cl.: B23B 31/16, B23B 31/19

(54) **Spanneinrichtung für Gegenstände, z.B. für zu bearbeitende Werkstücke**

(30) Priorität: 11.05.1999 DE 19921528
(71) Anmelder: C. Stiefelmayer GmbH & Co.KG, 73770 Denkendorf (DE)
(72) Erfinder: Denzinger, Otto, 73240 Wendlingen (DE); Schneider, Jens, 73730 Esslingen (DE)
(74) Vertreter: Kratzsch, Volkhard, Dipl.-Ing.

(57) **Zusammenfassung**

Die Erfindung betrifft eine Spanneinrichtung (10) für Gegenstände (11), mit einem Grundkörper (12) mit mindestens einer Anlagefläche (13) für den zu spannenden Gegenstand (11) und mit mindestens einem an einem bewegbaren Träger (14) befindlichen Spannfinger (15) mit Spannfläche (16) für den zu spannenden Gegenstand (11), wobei zwischen der Anlagefläche (13) und der Spannfläche (16) eine Spannkraft zum Spannen des Gegenstandes (11) aufbringbar ist. Der mindestens eine Träger (14) mit Spannfinger (15) steht mit einem Betätigungselement (17) zum Aufbringen der Spannkraft in Spannrichtung und gegensinnig dazu in Verbindung und ist ferner relativ zum Betätigungselement (17) in Richtung etwa quer zur Spannrichtung beweglich. Der mindestens eine Träger (14) mit Spannfinger (15) ist außerdem in einem Lagerklotz (18) relativ zu diesem beweglich gehalten, der seinerseits im Grundkörper (12) etwa quer zur Spannrichtung verschieblich ist.

## Beschreibung

Die Erfindung bezieht sich auf eine Spanneinrichtung für Gegenstände, z. B. für zu bearbeitende Werkstücke, der im Oberbegriff des Anspruchs 1 genannten Art.

Der Erfindung liegt die Aufgabe zugrunde, eine Spanneinrichtung dieser Art so auszubilden, daß der mindestens eine Träger mit Spannfinger selbsttätig quer zur Spannrichtung, z. B. radial, auf die jeweilige zum Spannen gewünschte Position einstellbar ist.

Die Aufgabe ist bei einer Spanneinrichtung der eingangs genannten Art gemäß der Erfindung durch die Merkmale im Anspruch 1 gelöst. Weitere Erfindungsmerkmale und vorteilhafte Ausgestaltungen ergeben sich aus den daran anschließenden übrigen Ansprüchen.

Durch die Erfindung ist es möglich gemacht, in Anpassung an den jeweils zu spannenden Gegenstand ohne besondere aufwendige Einstellarbeiten selbsttätig eine Querbewegung des mindestens einen Trägers mit Spannfinger in die zum Spannen erforderliche Sollposition zu bewirken. Dies geschieht in einfacher Weise durch einen die Querverstellbewegung begrenzenden Festanschlag, wobei dieser Festanschlag auswechselbar am Grundkörper befestigbar ist und jeweils an die Abmessungen des jeweils zu spannenden Gegenstandes angepaßt ist, z. B. bei zu spannenden kreisförmigen Werkstücken an den Werkstückdurchmesser angepaßt ist. Mit Vorteil dient der Festanschlag zugleich als Auflage für den jeweiligen zu spannenden Gegenstand, wobei der Festanschlag eine Anlagefläche für den zu spannenden Gegenstand aufweist. Der mindestens eine Träger mit endseitigem Spannfinger kann bei der Beaufschlagung der Spannkraft zum Spannen nicht nur achsparallel verschoben werden, sondern es können in einfacher Weise durch Gestaltung der Außennut während der axialen Bewegung zum Spannen und Lösen auch zusätzliche Schwenkbewegungen ausgeführt werden.

Die Spanneinrichtung gemäß der Erfindung ist einfach, betriebssicher und kostengünstig.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand eines in den Zeichnungen gezeigten Ausführungsbeispieles näher erläutert. Es zeigen:
- Fig. 1: einen schematischen Schnitt einer Spanneinrichtung für Gegenstände,

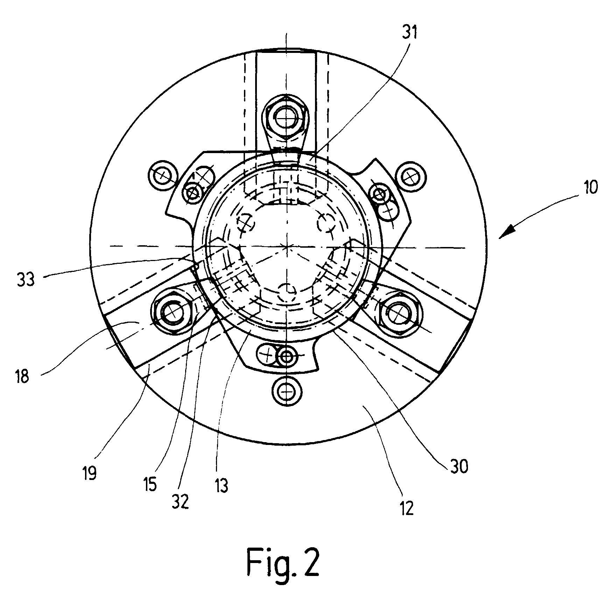

- Fig. 2: eine Seitenansicht der Spanneinrichtung in Fig. 1.

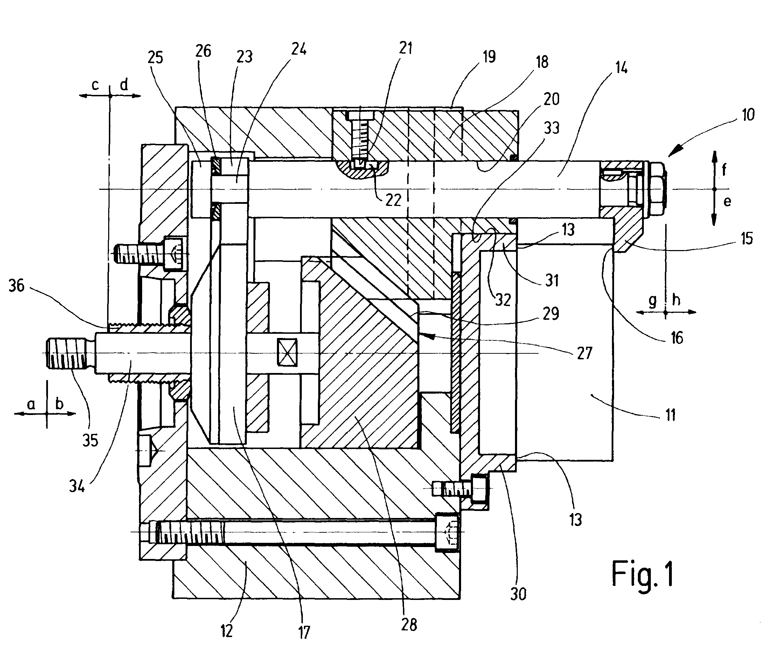

In den Zeichnungen ist eine Spanneinrichtung 10 für Gegenstände 11 gezeigt, z. B. für zu bearbeitende Werkstücke, wobei der Gegenstand 11 aus einem Teil oder aus z. B. mehreren im Paket zusammengepackten bzw. gespannten Einzelteilen bestehen kann. Die Spanneinrichtung 10 ist z. B. in herkömmlicher Weise an einer nicht weiter gezeigten Maschine, z. B. Bearbeitungsmaschine, angebracht. Die Spanneinrichtung 10 weist einen allgemein mit 12 bezeichneten Grundkörper auf, der im wesentlichen beliebige Form haben kann und beim gezeigten Ausführungsbeispiel als runder Körper ausgebildet ist. Der Grundkörper 12 ist Träger mindestens einer Anlagefläche 13, die später noch näher beschrieben ist und die die Anlagefläche für den mindstens einen zu spannenden Gegenstand 11 bildet. Teil der Spanneinrichtung 10 ist ferner mindestens ein Träger 14 mit einem daran auswechselbar gehaltenen Spannfinger 15. Der Spannfinger 15 ist auf der der Anlagefläche 13 zugewandten Seite mit mindestens einer Spannfläche 16 für den zu spannenden Gegenstand 11 versehen. Die zum Spannen des Gegenstandes 11 aufgebrachte Spannkraft ist zwischen der Anlagefläche 13 und der Spannfläche 16 wirksam, wobei die Spannrichtung bei der Darstellung in Fig. 1 im wesentlichen horizontal verläuft.

Der mindestens eine Träger 14 mit Spannfinger 15 steht mit einem Betätigungselement 17 zum Aufbringen der Spannkraft in Spannrichtung und gegensinnig dazu in Verbindung. Bei Betätigung des Betätigungselements 17 in Richtung c bzw. d wird darüber der Träger 15 in Horizontalrichtung zur einen bzw. zur anderen Seite mitgenommen. Die Betätigung des Betätigungselements 17 in Richtung des Pfeiles c bewirkt das eigentliche Spannen des Gegenstandes 11 zwischen der Spannfläche 16 und der Anlagefläche 13. Eine gegensinnige Bewegung des Betätigungselements 17 in Pfeilrichtung d hat ein Öffnen der Spannung zur Folge.

Der mindestens eine Träger 14 ist außerdem relativ zum Betätigungselement 17 in Richtung etwa quer zur Spannrichtung, bei der Darstellung in Fig. 1 nach oben bzw. nach unten, beweglich. Ferner ist der Träger 14 in einem Lagerklotz 18 relativ zu diesem beweglich gehalten, der seinerseits in einem Schlitz 19 im Grundkörper 12 in Richtung etwa quer zur Spannrichtung verschieblich gehalten ist.

Der mindestens eine Träger 14 ist beim gezeigten Ausführungsbeispiel etwa parallel zur Spannrichtung, d. h. in Fig. 1 etwa in horizontaler Richtung, im Lagerklotz 18 verschiebbar und außerdem in Bezug auf den Lagerklotz 18 undrehbar gehalten. Der Lagerklotz 18 enthält eine Längsbohrung 20, in der der Träger 14 in Form einer Stange horizontal verschieblich aufgenommen ist. Der Lagerklotz 18 weist einen Sperrvorsprung 21, z. B. in Form einer Schraube mit Vorsprung, auf, der in eine Außennut 22 des Trägers 14 formschlüssig eingreift. Beim gezeigten Ausführungsbeispiel weist die Außennut 22 einen etwa parallel zur Längsachse des Trägers 14 verlaufenden Abschnitt auf, in den der Sperrvorsprung 21 eingreift, wodurch die undrehbare Halterung erreicht ist.

Bei einem anderen,nicht gezeigten Ausführungsbeispiel ist der Träger 14 in Bezug auf den Lagerklotz 18 zusätzlich zur Längsverschiebbarkeit oder statt dieser schwenkbar um die Achse des Trägers 14 gehalten. Die Außennut 22 kann z. B. einen schräg bzw. bogenförmig und/oder etwa parallel zu dessen Längsachse verlaufenden Abschnitt aufweisen. Der schräg bzw. bogenförmig verlaufende Abschnitt bewirkt bei der Längsverschiebung des Trägers 14 zusammen mit dem Sperrvorsprung 21 eine Schwenkung und/oder Längsverschiebung des Trägers 14 relativ zum Lagerklotz 18, womit also der axialen Bewegung zum Spannen bzw. Lösen eine zusätzliche Schwenkbewegung überlagert ist.

Das Betätigungselement 17 weist je Träger 14 einen etwa quer zur Spannrichtung, d.h. in Fig. 1 vertikal, verlaufenden Schlitz 23 auf, der von einem Endteil 24 des Trägers 14 mit Spiel durchsetzt ist, wobei der Endteil 24 des Trägers 14 in Bezug auf das Betätigungselement 17 vorzugsweise pendelnd in Horizontalrichtung abgestützt ist. Der Endteil 24 liegt mit einer in Fig. 1 rechts befindlichen Fläche an einer dortigen Fläche, die beidseitig des Schlitzes 23 verläuft, am Betätigungselement 17 an. Auf der gegenüberliegenden Seite weist der Endteil 24 einen Kopf 25 auf, der über eine kugelsegmentförmige Abstützung 26 axial an der zugewandten Seite des Betätigungselements 17 anliegt.

Die Spanneinrichtung 10 weist eine auf den mindestens einen Lagerklotz 18 arbeitende Querverstelleinrichtung 27 auf, die ein dem Lagerklotz 18 zugeordnetes Schiebeglied 28 aufweist. Das Schiebeglied 28 ist in Bezug auf den Grundkörper 12 etwa parallel zur Spannrichtung, in Fig. 1 also etwa horizontal, geführt. Der Lagerklotz 18 ist am Schiebeglied 28 längs einer schräg zur Spannrichtung, in Fig. 1 schräg von oben nach unten und von links nach rechts, verlaufenden Führungsfläche 29 geführt. Diese schräge Führungsfläche 29 ist nach dem Keilhakenprinzip gestaltet und hierbei z. B. als Schwalbenschwanzführung ausgebildet.

Am Grundkörper 12 ist zur Bildung der Anlagefläche 13 ein Festanschlag 30 auswechselbar befestigt, insbesondere angeschraubt. Dieser Festanschlag 30 ist dem jeweiligen zu spannenden Gegenstand 11 zugeordnet und an diesen angepaßt. Diese Anpassung ist sowohl hinsichtlich der Form als auch der Abmessungen vorgenommen. Beim gezeigten Ausführungsbeispiel ist der Festanschlag 30 etwa topfförmig gestaltet und entsprechend einem liegenden U angeordnet, wobei dessen Ringstirnfläche, die in Fig. 1 nach rechts weist, die Anlagefläche 13 bildet. Bei einem anderen, nicht gezeigten Ausführungsbeispiel mit z. B. einem anders geformten und/oder bemessenen Gegenstand 11 ist der Festanschlag 30 in Anpassung daran anders gestaltet. Er dient als Auflage für den Gegenstand 11. Der Festanschlag 30 weist einen Abschnitt 31 mit einer dem mindestens einen Lagerklotz 18 zugewandten Anschlagfläche 32 auf. In Zuordnung dazu ist der mindestens eine Lagerklotz 18 mit einer der Anschlagfläche 32 zugewandten Fläche 33 versehen, mit der der Lagerklotz 18 bei seiner Einstellung mittels der Querverstelleinrichtung 27 an der Anschlagfläche 32 unter Erreichen der dem jeweiligen zu spannenden Gegenstand 11 zugeordneten Sollausgangsposition zum Spannen anschlägt. Die Anschlagfläche 32 und die zugeordnete Fläche 33 des mindestens einen Lagerklotzes 18 verlaufen etwa parallel zur Spannrichtung, wobei deren Anschlagzusammenwirkung quer zur Spannrichtung geschieht.

Das Betätigungselement 17 ist relativ zum Schiebeglied 28 und unabhängig von letzterem translatorisch betätigbar, insbesondere verschiebbar. Dem Betätigungselement 17 einerseits und dem Schiebeglied 28 andererseits ist jeweils zur jeweiligen Betätigung ein eigener Antrieb, insbesondere ein druckmittelbetriebener Arbeitszylinder, zugeordnet, der nicht weiter gezeigt ist. Das Schiebeglied 28 ist mit einer Stange 34 verbunden, an deren Ende 35 ein vorstehend beschriebener Antrieb angreifen kann. Die Stange 34 durchsetzt das Betätigungselement 17, welches seinerseits mittels einer Hülse 36 auf der Stange 34 relativ zu dieser verschiebbar ist, wobei an der Hülse 36 der dem Betätigungselement 17 zugeordnete Antrieb angreifen kann. Das Betätigungselement 17 kann in Bezug auf seine Hülse 36 pendelnd gehalten sein.

Die Spanneinrichtung 10 kann als Längsgebilde etwa nach Art eines Flachbettes ausgebildet sein, wobei die miteinander in Berührung stehenden einzelnen Flächen jeweils flacheben ausgebildet sind.

Beim gezeigten Ausführungsbeispiel ist die Spanneinrichtung 10 im wesentlichen als rotationssymmetrisches Gebilde gestaltet, was jedoch nicht zwingend ist. Hierbei ist das Betätigungselement 17 als Ringteil mit mindestens einem einen radialen Schlitz 23 enthaltenden abstehenden Finger ausgebildet. Das Schiebeglied 28 besteht aus einer Scheibe. Der Grundkörper 12 weist mehrere, z. B. drei, in Umfangsrichtung in vorzugsweise gleichen Winkelabständen voneinander angeordnete Lagerklötze 18 mit jeweils einem Träger 14 mit Spannfinger 15 auf, so daß bei einem runden zu spannenden Gegenstand 11 die Spannkraft an mehreren, z. B. drei, in Umfangsrichtung in vorzugsweise gleichen Winkelabständen voneinander angeordneten Stellen wirksam ist.

Wird über die Stange 34 das Schiebeglied 28 in axialer Richtung gemäß Pfeil a, d. h. in Fig. 1 nach links, bewegt, so wird der mindestens eine Lagerklotz 18 in radialer Richtung gemäß Pfeil e, d. h. in Fig. 1 nach unten, bewegt. Eine gegensinnige Bewegung des Schiebegliedes 28 in Pfeilrichtung b hat eine gegensinnige Verschiebung des Lagerklotzes 18 in Pfeilrichtung f, d. h. in Fig. 1 nach oben, zur Folge. Da der jeweilige Träger 14 mit endseitigem Spannfinger 15 im jeweiligen Lagerklotz 18 gelagert ist, bewegt sich der Träger 14 mit Spannfinger 15 bei der radialen Bewegung des Lagerklotzes 18 in radialer Richtung mit. Die gewünschte Position des endseitigen Spannfingers 15, die abhängig z. B. vom Durchmesser des zu spannenden Gegenstandes 11 ist, wird durch Anbringen und Befestigen eines zugeordneten geeigneten Festanschlages 30 erreicht, der als Auflage für den Gegenstand 11 dient. Auch kann die Lage über eine Festsetzung der Bewegung des Schiebegliedes 28 erreicht werden.

Durch Betätigung des Betätigungselements 17 in axialer Richtung gemäß dem Pfeil c, d. h. in Fig. 1 nach links, wird der jeweilige Träger 14 mit endseitigem Spannfinger 15 in gleicher Richtung, relativ zum Lagerklotz 18, verschoben, somit in Pfeilrichtung g in Fig. 1 nach links. Dies hat die eigentliche Spannung des eingelegten Gegenstandes 11 zur Folge. Wie vorstehend im Zusammenhang mit der Ausbildung der Außennut 22 beschrieben ist, können durch entsprechende Gestaltung der Außennut 22 bzw. deren Abschnitte nicht nur horizontale Translationsbewegungen des Trägers 14 während der axialen Bewegung zum Spannen und Lösen sondern auch noch zusätzliche Schwenkbewegungen verwirklicht werden.

Durch Bewegung des Betätigungselements 17 in Richtung des Pfeiles d, d. h. in Fig. 1 nach rechts, wird die Spannung geöffnet. Je nach Vorgehensweise beim Entladen des Gegenstandes 11 kann nun entweder das Schiebeglied 28 in Richtung b, d. h. in Fig. 1 nach rechts, verschoben werden, damit der Lagerklotz 18 radial nach außen bewegt wird und zusammen damit der jeweilige darin enthaltene Träger 14 mit Spannfinger 15 ebenfalls radial nach außen bewegt wird, oder es wird das Schiebeglied 28 in Position belassen und erst wieder bewegt, wenn ein anderer Gegenstand 11 mit einem anderen Durchmesser gespannt werden soll. Beim Betätigen des jeweiligen Lagerklotzes 18 über die Translationsbewegung des Schiebegliedes 28 wird automatisch die zum Spannen dem Gegenstand 11 zugeordnete Radialposition erreicht, da bei der Verschiebung des Schiebegliedes 28 in Fig. 1 nach links der jeweilige Lagerklotz 18 radial nach innen bewegt wird, soweit, bis er mit seiner Fläche 33 an der Anschlagfläche 32 des Festanschlages 30 anschlägt. Damit ist automatisch und ohne sonstige notwendige Einstellarbeit die entsprechende Radialposition für den jeweiligen Spannfinger 15 erreicht, die in Anpassung an den zu spannenden Gegenstand 11 notwendig ist. Die radial nach innen gerichtete Bewegung des jeweiligen Lagerklotzes 18 wird über hier nicht weiter gezeigte, auf den jeweiligen Lagerklotz 18 in dieser Richtung einwirkende Kraftmittel erreicht, z. B. durch Federkraft oder z. B. durch druckmittelbetriebene Arbeitszylinder.

## Patentansprüche

1. Spanneinrichtung für Gegenstände, z.B. für zu bearbeitende Werkstücke, mit einem Grundkörper (12) mit zumindest einer Anlagefläche (13) für den mindestens einen zu spannenden Gegenstand (11) und mit mindestens einem an einem bewegbaren Träger (14) befindlichen Spannfinger (15) mit zumindest einer Spannfläche (16) für den mindestens einen zu spannenden Gegenstand (11), wobei zwischen der Anlagefläche (13) und der Spannfläche (16) eine Spannkraft zum Spannen des mindestens einen Gegenstandes (11) auf bringbar ist,
**dadurch gekennzeichnet,**
daß der mindestens eine Träger (14) mit Spannfinger (15) mit einem Betätigungselement (17) zum Aufbringen der Spannkraft in Spannrichtung und gegensinnig dazu in Verbindung steht sowie in Richtung etwa quer zur Spannrichtung relativ zum Betätigungselement (17) beweglich ist und daß der mindestens eine Träger (14) mit Spannfinger (15) ferner in einem Lagerklotz (18) relativ zu diesem beweglich gehalten ist, der seinerseits im Grundkörper (12) etwa quer zur Spannrichtung verschieblich ist.

2. Spanneinrichtung nach Anspruch 1,
**dadurch gekennzeichnet,**
daß der mindestens eine Träger (14) im Lagerklotz (18) etwa parallel zur Spannrichtung verschiebbar gehalten ist.

3. Spanneinrichtung nach Anspruch 1 oder 2,
**dadurch gekennzeichnet,**
daß der mindestens eine Träger (14) in bezug auf den Lagerklotz (18) undrehbar gehalten ist.

4. Spanneinrichtung nach einem der Ansprüche 1 bis 3,
**dadurch gekennzeichnet,**
daß der mindestens eine Träger (14) in bezug auf den Lagerklotz (18) um seine Längsachse schwenkbar und/oder längsverschiebbar gehalten ist.

5. Spanneinrichtung nach einem der Ansprüche 1 bis 4,
**dadurch gekennzeichnet,**
daß der Lagerklotz (18) eine Längsbohrung (20) enthält, in der der Träger (14) in der Ausbildung als Stange beweglich aufgenommen ist.

6. Spanneinrichtung nach einem der Ansprüche 1 bis 5,
**dadurch gekennzeichnet,**
daß der Lagerklotz (18) einen Sperrvorsprung (21) aufweist, der in eine Außennut (22) des Trägers (14) formschlüssig eingreift.

7. Spanneinrichtung nach Anspruch 6,
**dadurch gekennzeichnet,**
daß die Außennut (22) des Trägers (14) einen schräg bzw. bogenförmig und/oder etwa parallel zu dessen Längsachse verlaufenden Abschnitt aufweist, mittels dessen im Zusammenwirken mit dem eingreifenden Sperrvorsprung (21) bei der Längsverschiebung des Trägers (14) dessen Schwenkung und/oder Längsverschiebung relativ zum Lagerklotz (18) steuerbar ist.

8. Spanneinrichtung nach einem der Ansprüche 1 bis 7,
**dadurch gekennzeichnet,**
daß das Betätigungselement (17) je Träger (14) einen quer zur Spannrichtung verlaufenden Schlitz (23) aufweist, der von einem Endteil (24) des Trägers (14) mit Spiel durchsetzt ist, wobei der Endteil (24) des Trägers (14) in bezug auf das Betätigungselement (17) vorzugsweise pendelnd abgestützt ist.

9. Spanneinrichtung nach einem der Ansprüche 1 bis 8,
**gekennzeichnet durch**
eine auf den mindestens einen Lagerklotz (18) arbeitende Querverstelleinrichtung (27).

10. Spanneinrichtung nach Anspruch 9,
**dadurch gekennzeichnet,**
daß die Querverstelleinrichtung (27) ein dem Lagerklotz (18) zugeordnetes Schiebeglied (28) aufweist, das in bezug auf den Grundkörper (12) etwa parallel zur Spannrichtung geführt ist, und daß der Lagerklotz (18) am Schiebeglied (28) längs einer schräg zur Spannrichtung verlaufenden Führungsfläche (29)geführt ist.

11. Spanneinrichtung nach einem der Ansprüche 1 bis 10,
**dadurch gekennzeichnet,**
daß am Grundkörper (12) zur Bildung der Anlagefläche (13) ein Festanschlag (30) auswechselbar befestigt ist, der dem jeweiligen zu spannenden Gegenstand (11) zugeordnet und an diesen angepaßt ist.

12. Spanneinrichtung nach Anspruch 11,
**dadurch gekennzeichnet,**
daß der Festanschlag (30) einen Abschnitt (31) mit einer dem mindestens einen Lagerklotz (18) zugewandten Anschlagfläche (32) aufweist und daß der mindestens eine Lagerklotz (18) eine zugewandte Fläche (33) aufweist, mit der der Lagerklotz (18) bei seiner Einstellung mittels der Querverstelleinrichtung (27) an der Anschlagfläche (32) unter Erreichen der dem jeweiligen zu spannenden Gegenstand (11) zugeordneten Sollausgangsposition zum Spannen anschlägt.

13. Spanneinrichtung nach Anspruch 12,
**dadurch gekennzeichnet,**
daß die Anschlagfläche (32) und die zugeordnete Fläche (33) des mindestens einen Lagerklotzes (18) etwa parallel zur Spannrichtung verlaufen und deren Anschlagzusammenwirkung quer zur Spannrichtung geschieht.

14. Spanneinrichtung nach einem der Ansprüche 10 bis 13,
**dadurch gekennzeichnet,**
daß die schräg verlaufende Führungsfläche (29) nach dem Keilhakenprinzip gestaltet ist, z.B. als Schwalbenschwanzführung ausgebildet ist.

15. Spanneinrichtung nach einem der Ansprüche 1 bis 14,
**dadurch gekennzeichnet,**
daß das Betätigungselement (17) relativ zum Schiebeglied (28) und unabhängig von diesem translatorisch betätigbar, insbesondere verschiebbar, ist.

16. Spanneinrichtung nach einem der Ansprüche 1 bis 15,
**dadurch gekennzeichnet,**
daß dem Betätigungselement (17) einerseits und dem Schiebeglied (28) andererseits zur jeweiligen Betätigung jeweils ein eigener Antrieb, insbesondere ein druckmittelbetriebener Arbeitszylinder, zugeordnet ist.

17. Spanneinrichtung nach einem der Ansprüche 1 bis 16,
**dadurch gekennzeichnet,**
daß das Betätigungselement (17) als Ringteil mit mindestens einem einen Schlitz (23) enthaltenden abstehenden Finger ausgebildet ist.

18. Spanneinrichtung nach einem der Ansprüche 1 bis 17,
**dadurch gekennzeichnet,**
daß das Schiebeglied (28) aus einer Scheibe besteht.

19. Spanneinrichtung nach einem der Ansprüche 1 bis 18,
**dadurch gekennzeichnet,**
daß der Grundkörper (12) mehrere, z.B. drei, in Umfangsrichtung in vorzugsweise gleichen Umfangswinkelabständen voneinander angeordnete Lagerklötze (18) mit jeweils einem Träger (14) mit Spannfinger (15) aufweist.

20. Spanneinrichtung nach einem der Ansprüche 11 bis 19,
**dadurch gekennzeichnet,**
daß der Festanschlag (30) etwa topfförmig gestaltet und entsprechend einem liegenden U angeordnet ist, wobei dessen Ringstirnfläche die Anlagefläche (13) bildet.
